**Europäisches Patentamt**

**European Patent Office**

**Office européen des brevets**

(11) Veröffentlichungsnummer: **0 011 062**
**B1**

(12) **EUROPÄISCHE PATENTSCHRIFT**

(51) Int. Cl.³: **H 01 S 3/03** // H01S3/097, H01S3/045

(45) Veröffentlichungstag der Patentschrift:
**20.07.83**

(21) Anmeldenummer: **79890045.2**

(22) Anmeldetag: **30.10.79**

(54) **Pulsweise arbeitender, transversal elektrisch angeregter Atmosphärendruck-Gaslaser (TEA-Laser).**

(30) Priorität: **03.11.78 AT 7881/78**
**12.10.79 AT 6664/79**

(43) Veröffentlichungstag der Anmeldung:
**14.05.80 Patentblatt 80/10**

(45) Bekanntmachung des Hinweises auf die Patenterteilung:
**20.07.83 Patentblatt 83/29**

(84) Benannte Vertragsstaaten:
**BE CH DE FR GB IT LU NL SE**

(56) Entgegenhaltungen:
DE-A-2 042 615
FR-A-2 216 699
FR-A-2 250 215
US-A-3 940 710
US-A-3 974 458
US-A-4 024 465
US-A-4 080 578

IEEE JOURNAL OF QUANTUM ELECTRONICS, Band QE-8, Nr. 8, August 1972, Seiten 718–719 New York, USA D.B. NICHOLS et al.: «Radio-Frequency Preionization in a Supersonic Transverse Electrical Discharge Laser»

(73) Patentinhaber: **VOEST-ALPINE Aktiengesellschaft,**
**Werksgelände, A-4010 Linz (AT)**

(72) Erfinder: **Schuöcker, Dieter, Dr., Veitingergasse 30/5,**
**A-1130 Wien (AT)**
Erfinder: **Reif, Werner, Dr., Alleiten 22,**
**A-3400 Klosterneuburg (AT)**

(74) Vertreter: **Wolfram, Gustav, Dipl.-Ing.,**
**Schwindgasse 7 P.O. Box 205, A-1041 Wien (AT)**

COMPTES RENDUS HEBDOMADAIRES DES SEANCES DE L'ACADEMIE DES SCIENCES, Band 274, Nr. 24, 12. Juni 1972 Seite B 1322 – Seite B 1325 Paris, FR. Y. BALOCHIN et al.: «TEA laser CO2 monochromatique»

SOVIET JOURNAL OF QUANTUM ELECTRONICS, Band 8, Nr. 4, April 1978 Seiten 528–529 New York, USA A.V. ARTAMONOV et al.: «Continuouswave closed-cycle technological CO2 laser with 6kW output power»

APPLIED OPTICS, Band 9, Nr. 12, Dezember 1970, Seiten 2737–2741 New York, USA G. SEDGWICK et al.: «Low voltage CO2 Laser Excitation»

## Pulsweise arbeitender, transversal elektrisch angeregter Atmosphärendruck-Gaslaser (TEA-Laser)

Die Erfindung betrifft einen pulsweise arbeitenden, transversal elektrisch angeregten Atmosphärendruck-Gaslaser (TEA-Laser) mit im Umlauf geführtem, gekühltem Arbeitsgas, mit einer gekühlten, als sich in Richtung der optischen Achse erstreckende, längliche metallisch leitende Platte ausgebildeten Kathode, einer im Abstand dazu angeordneten Anode und einer zwischen Kathode und Anode angeordneten durchbrochenen Hilfselektrode.

In Gaslasern wird ein mittels einer Glimmentladung erhaltenes Plasma zur Erzeugung kohärenter elektromagnetischer Strahlung mit Wellenlängen, welche Licht von Ultraviolett bis zum Infrarot entsprechen, verwendet. Bei modernen TEA-Lasern, vorzugsweise $CO_2$-Lasern, wird das Gas durch einen senkrecht zur Strahlausbreitungsrichtung fliessenden elektrischen Strom ionisiert. Dieser Strom wird durch zwei parallele, ebene Elektroden, zwischen denen das Plasma gleichmässig verteilt ist, zu- und abgeführt und gibt an das Plasma mehr Energie ab, als zur Ionisierung benötigt wird. Die überschüssige Energie wird teilweise in kohärente elektromagnetische Strahlung umgesetzt, wenn zwei Spiegel für eine Rückkopplung der durch die angeregten Gasmoleküle verstärkten Strahlung sorgen. Die abgegebene Strahlungsleistung steigt mit grösserer Elektrodenfläche, grösserem Elektrodenabstand und höherem Gasdruck. Dieser ist allerdings nach oben hin dadurch begrenzt, dass bei Überschreiten eines Drucks von etwa 104 Pa die zunächst den Raum zwischen den Elektroden homogen erfüllende Glimmentladung bei genügend hoher Stromstärke in eine Bogenentladung übergeht und der Strom nur in einem engen Kanal fliesst. Dadurch steht dann zur Erzeugung der Laserstrahlung nur mehr ein viel kleineres Plasmavolumen zur Verfügung und die Wirkungsweise ist nicht mehr befriedigend (s. z.B. W.W. Duley, $CO_2$-Lasers, Effects and Applications, Academic Press, New York, S. Francisco, London 1976, Seiten 15 bis 72).

Zur Verhinderung des Übergangs in eine Bogenentladung verwendet man bei relativ hohen Drücken vielfach unterteilte Elektroden. Dabei treten Entladungsinstabilitäten auf, die nur durch hohe ohmsche Vorwiderstände an jeder Teilelektrode verhindert werden können und daher sehr hohe Betriebsspannungen erforderlich machen. Eine andere ebenfalls bereits verwirklichte Möglichkeit besteht darin, eine Hauptelektrode als Gitter auszubilden und hinter dieser, ausserhalb des Hauptentladungsraums, eine mit einer isolierenden Schicht überzogene Hilfselektrode anzubringen. Legt man zwischen diese Hilfselektrode und das Gitter eine sehr hohe Spannung, so bildet sich eine Koronaentladung aus, die das Gitter gleichmässig überzieht. Legt man nun Spannungsimpulse zwischen das Gitter und die andere Hauptelektrode, bildet sich für die Dauer der Impulse eine den Hauptentladungsraum gleichmässig erfüllende Glimmentladung aus. Der Nachteil dieser Anordnung ist ebenfalls der sehr hohe Spannungsbedarf.

In den US-A 3 940 710 und 3 848 202 sind Dreielektrodenanordnungen beschrieben, wobei zwischen Kathode und Anode durchbrochene Hilfselektroden angeordnet sind. Die Kathoden sind bei den Lasern gemäss den US-Patentschriften stiftförmig – als sogenannte «pins» – ausgebildet. Zwischen den einzelnen pins und einem darüber befindlichen Loch in der Hilfselektrode bilden sich inhomogene Entladungen aus, welche die Entstehung einer grossflächigen homogenen Glimmentladung beeinträchtigen.

Im IEEE Journal of Quantum Electronics, Band QE-8, Nr. 8, August 1972, ist auf den Seiten 718 und 719 eine Hochfrequenz-Vorionisation mit 11 MHz in einem von Lasergas mit Überschallgeschwindigkeit durchströmten TE-Laser beschrieben, wobei ein Gitter im Abstand von 3 mm von der Kathode bei einem Druck des Lasergases von $6,7 \cdot 10^3$ bis $26,7 \cdot 10^3$ Pa (50 bis 200 Torr) vorgesehen ist. Die HF (RF)-Entladung wird zwischen Gitter und Kathode betrieben. Der Schaltungsaufwand für eine RF-Hilfsentladung der benötigten hohen Leistung ist beträchtlich, ausserdem sind infolge der erzeugten Streufelder aufwendige Abschirmmassnahmen erforderlich.

Die Erfindung bezweckt die Vermeidung der geschilderten Nachteile und Schwierigkeiten und stellt sich die Aufgabe, einen Gaslaser, in welchem ein räumlich gleichmässig verteiltes Plasma bei gleichzeitig geringerem Spannungsbedarf und hoher Impulsfrequenz mit grosser Zuverlässigkeit aufgebaut und aufrechterhalten werden kann, bzw. ein Lasersystem aus erfindungsgemässen Lasern zwecks Leistungsverstärkung zu schaffen.

Die Erfindung, mit der diese Aufgabe gelöst wird, besteht bei einem Gaslaser der eingangs erwähnten Art darin, dass zwecks Erzeugung einer die gesamte Kathode bedeckenden Glimmhaut die metallisch leitende Hilfselektrode unmittelbar vor dem Kathodenfall der Hilfsentladung zwischen Kathode und Anode parallel zur Kathode angeordnet ist und gegenüber der Kathode positives Potential aufweist.

Die Kathodenplatte ist zweckmässig in an sich bekannter Weise für den Durchfluss einer Kühlflüssigkeit hohl ausgebildet oder mit Kühlkanälen versehen.

Die Hilfselektrode ist vorteilhaft in mehrere voneinander elektrisch getrennte Abschnitte unterteilt, die durch getrennte Stromquellen anspeisbar sind.

Nach einer Ausführungsform ist die Hilfselektrode in einen eine unipolare Spannungsimpulse liefernde Spannungsquelle enthaltenden Stromkreis geschaltet.

Zwischen Kathode und Hilfselektrode wird eine normale Glimmentladung aufrechterhalten, welche die ganze Kathodenfläche gleichmässig bedeckt. Infolge des geringen Abstandes von einigen Zehntelmillimetern zwischen Kathode und Hilfselektrode bildet sich keine Säule aus, die kontrahieren könnte, und die Entstehung eines Lichtbogenfusspunktes kann durch gute Kühlung der Kathode verhindert werden. Die Glimmentladung zwischen Kathode und Hilfselektrode kann mit etwa 1000 V betrieben werden und benötigt somit vorteilhafterweise eine viel niedrigere Spannung als eine Koronaentladung. Beim Betrieb des erfindungsgemässen Lasers wird zwischen Anode und Kathode eine Spannung in der Grössenordnung von einigen Kilovolt angelegt; dadurch werden die in der die gesamte Kathode bedeckenden Glimmhaut sehr zahlreich vorhandenen Elektronen gleichmässig durch die Hilfselektrode gesaugt und treten in den Hauptentladungsraum zwischen Hilfselektrode und Anode ein. Dort werden sie durch die hohe Spannung so stark beschleunigt, dass sie durch Stossionisation ein Plasma erzeugen. Dabei erfolgt der Aufbau des Plasmas völlig gleichmässig über den gesamten Querschnitt des Entladungsraumes; damit ist eine optimale Arbeitsweise des Lasers gewährleistet. Da in der zwischen Hilfselektrode und Kathode aufrechterhaltenen Glimmentladung eine viel höhere Elektronendichte als in der Koronaentladung vorliegt, erfolgt bei der erfindungsgemässen Anordnung der Aufbau des Plasmas im Hauptentladungsraum wesentlich schneller und sicherer, was für die Arbeitsweise des Lasers sehr vorteilhaft ist.

Vorzugsweise ist die Anode über eine Funkenstrecke und die Kathode direkt mit einem Kondensator verbunden und es liegt der Kondensator zwecks Aufladung über einen Widerstand an einer Gleichspannungsquelle.

Auf diese Weise kann ein schneller Aufbau einer hohen Spannung zwischen Anode und Kathode erreicht werden; bei Erreichen einer kritischen Kondensatorspannung, die etwas höher als die Durchbruchspannung der Funkenstrecke ist, wird die Spannung an die Anode geführt. Die im Kondensator gespeicherte Ladung begrenzt dann die Dauer des Stromflusses über die Hauptentladung. Die als Schalter verwendete Funkenstrecke kann auch durch einen Thyristor oder andere für diesen Zweck geeignete Bauelemente und eine passende Ansteuerschaltung ersetzt werden.

Vorteilhafte Ausgestaltungen der Erfindung bestehen darin, dass die durchbrochene Hilfselektrode

a) aus quer zur Längserstreckung der Kathodenplatte verlaufenden Drähten gebildet ist oder

b) als geschlitzte Platte oder als eine Mehrzahl von geschlitzten Platten ausgebildet ist, wobei die Schlitze senkrecht zur Längserstreckung der Kathodenplatte verlaufen oder

c) als Lochmaske mit Löchern von etwa 0,5 bis 1 mm Durchmesser und einem Flächenverhältnis von Lochfläche : Stegfläche von etwa 1 : 3 ausgebildet ist oder

d) aus nahe – d.h. in einem Abstand von etwa 1 bis 2 mm – nebeneinanderliegenden, sich quer zur Längsrichtung der Kathode erstreckenden hohlen, von einem nicht leitenden Kühlmittel durchflossenen Stäben mit einem Aussendurchmesser von etwa 2 mm besteht, die getrennt elektrisch anspeisbar sind, wobei vorzugsweise auch die Anode hohl ausgebildet und von einem nicht leitenden Kühlmittel durchflossen ist.

Die durchbrochene Hilfselektrode liegt mit ihren Rändern zweckmässig auf zwischen Kathode und Hilfselektrode vorgesehenen Isolierfolienstreifen auf.

Die Hilfselektrode ist vorteilhaft in einem Abstand von 0,2 bis 0,7 mm parallel zur Kathode angeordnet, wobei die Kathode und die Anode als ebene oder nach Art eines Rogowski-Profiles gekrümmte Platte ausgebildet ist.

Als Isolierfolienstreifen können insbesondere Streifen aus Polytetrafluoräthylen, wie Teflon ® verwendet werden.

Die Ausdehnung des Kathodenfallgebietes hängt in geringem Ausmass von der Beschaffenheit des Lasergases ab. Wenn im Lasergasgemisch enthaltenes $CO_2$ angeregt werden soll, ist der angegebene Abstand zwischen Kathode und Hilfselektrode von 0,2 bis 0,7 mm optimal geeignet.

Nach Art eines Rogowsky-Profiles gekrümmte Elektroden verbessern die Homogenität des zwischen ihnen aufgebauten elektrischen Feldes. Daher haben zwischen Rogowsky-Elektroden impulsweise betriebene Glimmentladungen eine geringere Kontraktionsneigung; eine homogene Glimmentladung kann länger aufrecht erhalten werden.

Nach einer weiteren bevorzugten Ausführungsform sind die Kathode, die durchbrochene, im Bereich des Kathodenfalles angeordnete Hilfselektrode und die Anode in einem geschlossenen Gehäuse angeordnet, wobei die Längserstreckung ein Vielfaches – mindestens das 10fache – der Breiten- bzw. Höhenerstreckung des Gehäuses beträgt, und das Gehäuse im wesentlichen über seine ganze Länge gegenüberliegende Schlitze zum Ein- und Austritt des Arbeitsgases aufweist, wobei vorzugsweise das Gas zwischen Austritt und Eintritt über einen Wärmeaustauscher und eine Pumpe im Kreislauf geführt ist, vorzugsweise mit einer Geschwindigkeit von etwa 200 m/s.

Zum Erzielen einer höheren Leistung sind bei einem Lasersystem mit TEA-Lasern vorzugsweise eine Mehrzahl von solchen, jeweils eine Kathode, eine im Bereich des Kathodenfalles angeordnete Hilfselektrode und eine Anode enthaltende Gehäuse zu einer Kette zusammengefasst, wobei an einem Ende der Kette eine Gehäusewand einen total reflektierenden Spiegel und eine Gehäusewand am anderen Ende der Kette einen teildurchlässigen Spiegel aufweisen und alle Gehäusewände dazwischen durch gasdichte Kupplungsstücke, welche gegebenenfalls als Modenblende ausgebildet sind, miteinander verbunden sind.

Nach einer anderen Ausführungsform des Lasersystems sind alle Gehäusewände dazwischen mit für die Wellenlänge der erzeugten Strahlung durchlässigen Fenstern versehen.

Als Lasergas wird vorzugsweise ein handelsübliches, $CO_2$ und He enthaltendes Gasgemisch verwendet, es sind aber auch andere Gase, wie KrF, $N_2$, XeF, Ar, F, HF, CO oder $N_2O$ geeignet. Dabei müssen gegebenenfalls auch andere, auf die jeweilige Wellenlänge der kohärenten Strahlung abgestimmte Spiegel verwendet werden.

In der Zeichnung ist der Erfindungsgegenstand anhand mehrerer Ausführungsbeispiele schematisch näher erläutert:

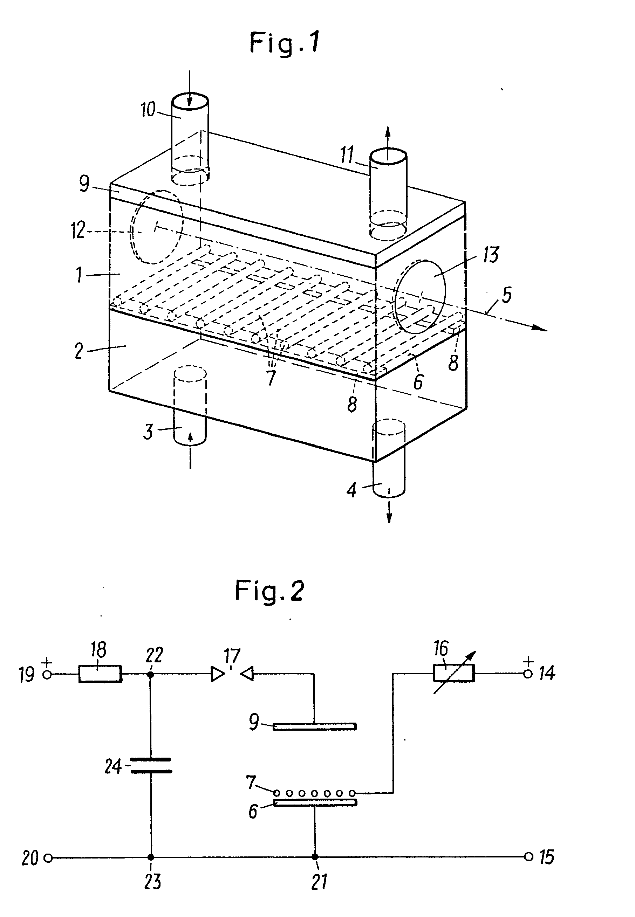

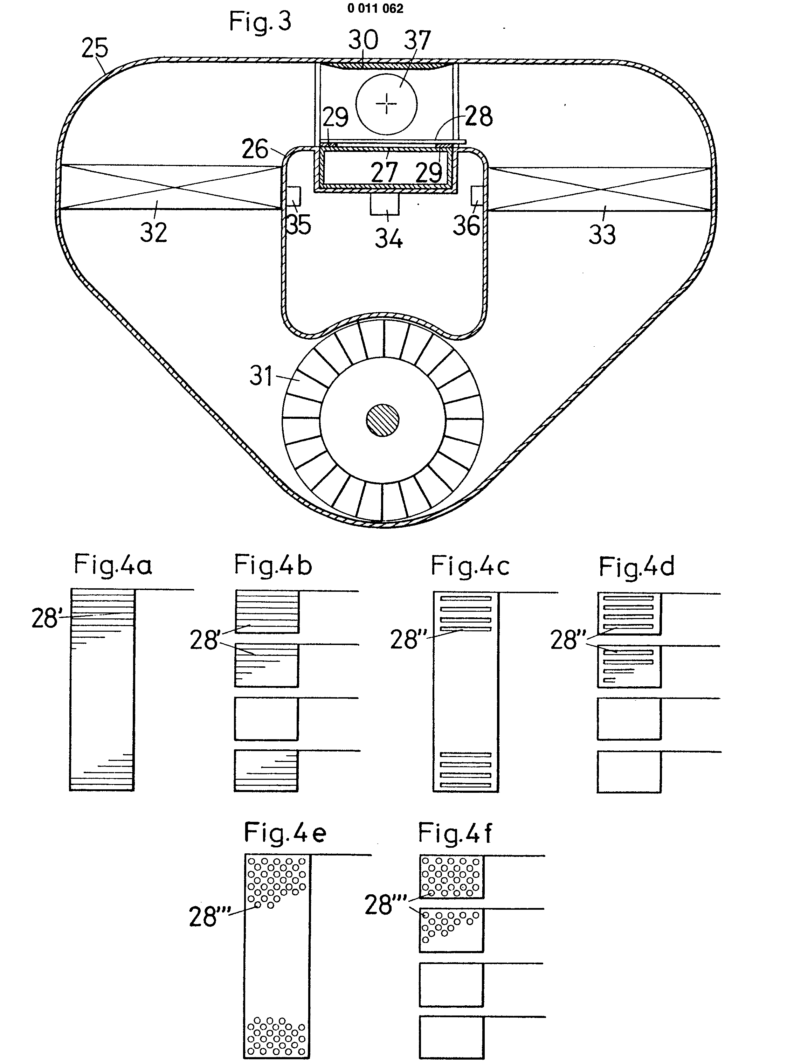

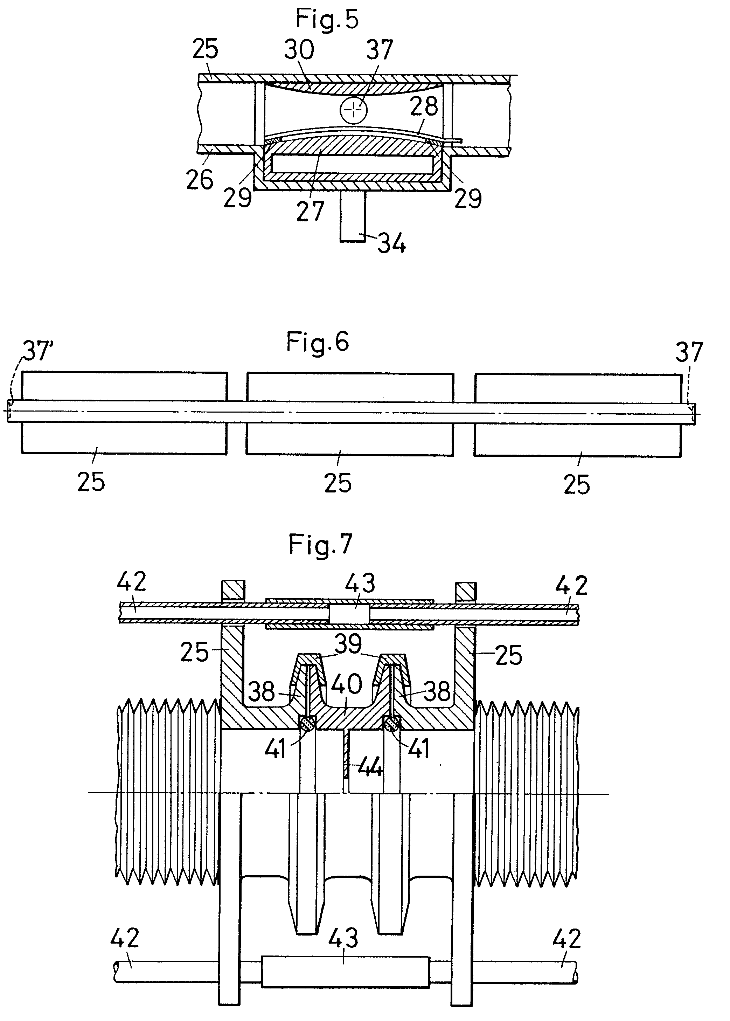

Fig. 1 zeigt eine schaubildliche Darstellung einer Ausführungsform des erfindungsgemässen TEA-Lasers und Fig. 2 ein zugehöriges Schaltbild. Fig. 3 stellt einen Querschnitt durch eine Ausführungsform einer Lasereinheit (Lasermodul) mit im Kreislauf geführtem Lasergas senkrecht zu ihrer optischen Achse dar; die Fig. 4a bis 4f zeigen Draufsichten auf verschieden ausgebildete Hilfselektroden, Fig. 5 veranschaulicht eine gegenüber der Darstellung in Fig. 3 abgeänderte Ausführungsform des Entladungsraumes; Fig. 6 eine schematisch dargestellte Reihenanordnung von mehreren Lasereinheiten und Fig. 7 eine Ausführungsform einer gasdichten Kupplung zwischen zwei benachbarten Lasereinheiten.

In Fig. 1 ist in einem schematisch strichliert angedeuteten und mit 1 bezeichneten gasdichten Gehäuse eine längliche hohle Metallkathode 2 angeordnet, die Anschlussstutzen 3 und 4 zur Zu- und Abführung von Kühlflüssigkeit aufweist. Diese Kathode besitzt eine sich in Richtung der optischen Achse 5 erstreckende längliche, metallisch leitende Platte 6. In unmittelbarer Nähe dieser Platte 6, nämlich im Abstand von einigen Zehntelmillimetern, d.i. im Bereich des Kathodenfalles, sind quer zur Längserstreckung der Platte 6 Gitterstäbe 7 nebeneinander angeordnet, die eine metallisch leitende Hilfselektrode bilden. Zur Einhaltung des gewünschten Abstandes sind zwischen den Enden der Stäbe und der Kathodenplatte Abstandhalter 8 vorgesehen. Die Gitterstäbe sind elektrisch leitend miteinander verbunden. Oberhalb der von den Stäben gebildeten Hilfselektroden ist die Anode 9 positioniert, die im dargestellten Beispiel Anschlussstutzen 10 und 11 zum Ein- und Austritt von Füllgas, wie $CO_2$, aufweist. In den Stirnseiten des Gehäuses sind Rückkopplungsspiegel eingesetzt, die mit 12 und 13 bezeichnet sind. Einer davon – 12 – ist total reflektierend und der andere – 13 – teildurchlässig, um den Austritt der Laserstrahlung zu ermöglichen.

Im Schaltbild gemäss Fig. 2 ist mit 14 der positiv gepolte Gitteranschlusspunkt und mit 15 der Kathodenanschlusspunkt bezeichnet, zwischen denen eine Gleichspannung von solcher Höhe angelegt wird, dass zwischen Hilfselektrode 7 und Kathode 6 eine Potentialdifferenz von etwa 1000 V herrscht. Dadurch wird zwischen der Kathodenplatte 6 und den Gitterstäben 7 eine normale Glimmentladung ausgebildet. Mit dem Widerstand 16 kann die Stromstärke der Hilfsentladung zwischen Gitter und Kathode geregelt werden. Da die normale Glimmentladung mit einer vom Strom unabhängigen Stromdichte $J_n$ brennt, kann ein Strom $I_g = J_n \cdot F_k$ eingestellt werden, bei dem die Glimmentladung gerade die volle Kathodenfläche bedeckt. Hierbei ist mit $F_k$ die Fläche der Kathode bezeichnet. Da der Abstand des Gitters von der Kathode nicht wesentlich grösser als die Ausdehnung des Kathodenfalles in Stromflussrichtung ist, bildet sich keine Säule in der Hilfsentladung aus und sie kann daher auch nicht kontrahieren. Durch die Kühlung der Kathode wird die Bildung von kathodischen Bogenfusspunkten durch Verdampfung des Kathodenmaterials verhindert, so dass zwischen Gitter und Kathode mit Sicherheit eine flächenhaft homogene Hilfsentladung besteht.

Im Schaltbild nach Fig. 2 liegt die Anode 9 über eine Funkenstrecke 17 und einen Widerstand 18 an dem positiven Pol 19 einer Gleichspannungsquelle, deren anderer Pol mit der Anschlussstelle 20 bezeichnet ist. Diese andere Anschlussstelle 20 ist mit dem Anschlusspunkt 21 der Kathodenplatte 6 verbunden. Dazwischen, nämlich zwischen den Anschlussstellen 22 und 23, ist ein Kondensator 24 vorgesehen, der also direkt mit der Kathode verbunden ist. Die Gleichspannung zwischen den Punkten 19 und 20 lädt über den Widerstand 18 den Kondensator 24 auf.

Wenn die Kondensatorspannung die Durchbruchspannung der Funkenstrecke 17 überschreitet, zündet diese und die Kondensatorspannung wird an die Anode 9 geschaltet. Dadurch werden über die ganze Gitterfläche gleichmässig Elektronen in den Raum zwischen Gitter und Anode gesaugt. Ist die Spannung an der Anode hinreichend hoch, so können diese Elektronen Gasatome in grosser Zahl ionisieren und es baut sich zwischen Kathode und Anode ein gleichmässig im Entladungsraum verteiltes Plasma auf. Dadurch wird die Entladungsstrecke zwischen Kathodenplatte 6 und Anode 9 gut leitend und der Kondensator 24 kann sich entladen. Im Raum zwischen Gitter 7 und Anode 9 wird nun vom Plasma durch Rückkopplung mittels der beiden Spiegel 12, 13 kohärente Laserstrahlung erzeugt.

Sinkt die Spannung am Kondensator 24 so weit ab, dass die Brennspannung der Funkenstrecke 17, welche viel kleiner als ihre Durchbruchspannung ist, unterschritten wird, unterbricht die Funkenstrecke 17 die Verbindung zwischen Kondensator 24 und Anode 9. Die Entladung im Raum zwischen Gitter 7 und Anode 9 erlischt und daher klingt auch die Laserstrahlung aus. Da nun der Kondensator 24 weitgehend entladen ist, wird er durch die an den Anschlussstellen 19, 20 liegende Spannung erneut aufgeladen und nach Erreichen der Durchbruchspannung der Funkenstrecke 17 wird neuerlich ein Laserimpuls erzeugt. Der erfindungsgemässe Laser liefert also mit der beschriebenen Schaltung pulsweise abgegebene Laserstrahlung, obwohl er nur mit Gleichspannungen betrieben wird.

In Fig. 3 ist die äussere Gehäusewand einer Lasereinheit mit 25, die innere mit 26 bezeichnet. Auf der Oberseite der inneren Gehäusewand ist ein Aufnahmeschacht für die hohle Kathode 27 vorgesehen, auf welcher die Hilfselektrode 28 –

durch Isolierfolienstreifen 29 von der Kathode im Abstand gehalten – angeordnet ist. Dieser Abstand ist so gewählt, dass sich die Hilfselektrode im Bereich des Kathodenfalles befindet.. An der Innenseite der äusseren Gehäusewand 25 befindet sich gegenüber der Kathode 27 bzw. der Hilfselektrode 28 die Anode 30. Der durch die drei Elektroden festgelegte Entladungsraum ist entlang seiner gesamten Längserstreckung gegenüber dem von den Gehäusewänden begrenzten Gasraum offen. Das Lasergas wird mittels eines Tangentialgebläses 31 über Wärmeaustauscher 32, 33 durch den Entladungsraum in Richtung quer zur Längsachse des Gehäuses im Kreislauf geführt. Zur Kühlung der hohl ausgebildeten Kathode sind Anschlussstutzen 34, zur Versorgung der Wärmeaustauscher 32, 33 mit Kühlmittel Anschlussstutzen 35, 36 vorgesehen. In der dargestellten Ausführungsform ist an der sichtbaren Stirnseite der Gehäusewand ein Spiegel 37 positioniert, wobei die optische Achse des Lasermoduls den Spiegelmittelpunkt durchsetzt.

In Fig. 4a ist eine Hilfselektrode aus einzelnen, miteinander leitend verbundenen Drähten 28′ dargestellt. Fig. 4b zeigt eine Hilfselektrode gleichen Aufbaus, jedoch ist jeweils eine bestimmte Zahl von Drähten zu einem durch getrennte Stromquellen anspeisbaren Abschnitt zusammengefasst. Die einzelnen Drähte können einen Durchmesser von etwa 0,3 mm aufweisen und sind im Abstand von etwa 1 mm voneinander angeordnet.

In Fig. 4c ist die Ausbildung der Hilfselektrode mit Schlitzen 28″ illustriert. In Fig. 4d ist eine entsprechend Fig. 4b in Abschnitte unterteilte, mit Schlitzen versehene Elektrode gezeigt. Die Schlitzbreite kann etwa 0,5 mm betragen, jene der dazwischen liegenden Stege 1 mm.

Eine besonders geeignete Hilfselektrode nach Art einer Lochmaske 28‴, wie sie in Fernsehbildröhren verwendet wird, ist in den Fig. 4e und 4f gezeigt, wobei die Elektrode wieder unterteilt sein kann.

Die Verwendung einer in Abschnitte unterteilten Lochmaske wird besonders bevorzugt, weil sich die Glimmhaut am besten über die gesamte Elektrodenfläche ausbreitet, wenn die Hilfselektrode keine Vorzugsrichtung aufweist, wie dies bei einzelnen Gitterfäden oder Gitterstäben quer zur Entladung gegeben ist. Nur bei sehr hohen Ausgangsleistungen ist die Verwendung von nebeneinander liegenden gekühlten Stäben als Hilfselektrode und zugleich auch die Verwendung einer gekühlten Anode notwendig. Dabei muss unbedingt eine nicht leitende Kühlflüssigkeit für Gitter und Anode verwendet werden. Die letztgenannte Ausführungsform bietet neben einer weiter verbesserten Kühlung des Lasergases auch den Vorteil des sicheren Vermeidens von Kurzschlüssen zwischen Hilfselektrode und Kathode, da sich die gekühlten Stäbe nicht durchbiegen.

Die Hilfselektrode kann weiters in Strahlausbreitungsrichtung eine periodische Struktur mit einer Periodenlänge aufweisen, die ein ganzzahliges Vielfaches der Wellenlänge der erzeugten Laserstrahlung beträgt. Dadurch kann erreicht werden, dass die von der strukturierten Gitteroberfläche in alle Richtungen gestreute Laserstrahlung in Ausbreitungsrichtung auslöschend und in der entgegengesetzten Richtung verstärkend interferiert und damit die notwendige Rückkopplung der Laserstrahlung auch ohne Spiegel erfolgen kann.

Ein Entladungsraum, bei dem sowohl die Kathode 27 als auch die Anode 30 Rogowsky-Profil aufweisen, ist in Fig. 5 dargestellt. Die Hilfselektrode 28 ist parallel zur Kathode angeordnet. Auch alle weiteren Bauteile sind mit den gleichen Bezugszeichen wie in Fig. 3 versehen.

In Fig. 6 ist schematisch veranschaulicht, in welcher Weise eine Mehrzahl von Lasermodulen, deren Gehäuseaussenwand mit 25 bezeichnet ist, zu einem Lasersystem vereinigt werden kann. An einer Endwand des Lasersystems ist ein total reflektierender Spiegel 37 vorgesehen, an der anderen ein partiell durchlässiger Spiegel 37′. Aus Gründen der Raumersparnis ist es auch möglich, den Laserstrahl gegebenenfalls mehrmals umzulenken, wodurch erreicht wird, dass die Lasermodule in einem Winkel zu ihrer optischen Achse aneinander gereiht werden können.

Zur gasdichten Verbindung zweier Lasereinheiten können gemäss Fig. 7 die einander zugewandten Gehäusewände 25 einen Flansch 38 aufweisen, welcher mittels einer Klammer 39 auf den entsprechenden Gegenflansch eines Kupplungsstückes 40 gepresst wird. Als Dichtung ist dabei jeweils ein O-Ring 41 vorgesehen. Mit den Gehäusewänden 25 sind Rohre 42 verbunden, die zur genauen Einstellung der notwendigen Distanz zwischen den Lasereinheiten bzw. den in den Endwänden angeordneten Spiegeln dienen. Die Rohre 42 sind mittels eines Verbindungsstückes 43 in einem bestimmten Abstand voneinander fixierbar. Das in der Zeichnung dargestellte Kupplungsstück 40 ist als Modenblende 44 ausgebildet.

Da die Betriebskosten etwa eines $CO_2$-Lasers zu einem erheblichen Teil durch den Heliumanteil im Lasergas bestimmt werden, ist ein Laser mit geschlossenem Gaskreislauf gemäss Fig. 3 von besonderem Vorteil. Da sich das Arbeitsgas jedoch bei seinem Durchgang durch den Entladungsraum stark erwärmt, wodurch der Wirkungsgrad und die Ausgangsleistung des Lasers sinken würde, ist gute Kühlung des Gases durch beispielsweise wasserbeschickte Wärmeaustauscher 32, 33 erforderlich. Das Durchströmen des Entladungsraumes quer zu seiner Längserstreckung hat gleichfalls den Zweck, die Gasaufheizung zu verringern, da grössere Gasvolumina bewegt werden können. Durch das in Fig. 3 gezeigte Tangentialgebläse 31 wird eine Gasströmung von breitem Querschnitt und hoher Geschwindigkeit erzeugt.

Die den Entladungsraum umschliessenden Gehäuseteile sind vorzugsweise aus Glas oder Kunststoff gefertigt. Zur Erzielung eines Laserstrahls guter optischer Qualität muss der Spiegelabstand genau definiert und möglichst temperaturunabhängig sein. Dazu können beispielsweise Rohre 42 aus Invarstahl verwendet werden, die in

Fig. 3 nicht dargestellt sind und welche an den Ecken des Entladungsraumes angeordnet sind. Der optische Resonator besteht aus einem planen, teildurchlässigen (etwa 80% Reflexion) und einem gekrümmten, total reflektierenden Spiegel, dessen Krümmungsradius wesentlich grösser als der Abstand der beiden Spiegel ist. Diese Resonatorausbildung hat den Vorteil, dass sie einfach justiert werden kann und der Laser auch bei geringfügiger Fehljustierung noch arbeitet. Bei der Serienschaltung von mehreren Lasermodulen gemäss den Fig. 6 und 7 soll der Krümmungsradius des total reflektierenden Spiegels grösser als die gesamte optische Länge zum teildurchlässigen Spiegel sein.

Bei dem gemäss Fig. 7 als Modenblende 44 ausgebildeten Kupplungsstück 40 wird eine Laserschwingung im Grundmodus dadurch erreicht, dass der Durchmesser der kreisförmigen Durchtrittsöffnung der Modenblende so dimensioniert wird, dass nur der Grundmodus $TEM_{oo}$ unbehindert durchtreten kann. Alle höheren Moden werden dadurch gedämpft und deren Anschwingen verhindert. Die Laserschwingung im Grundmodus ist wünschenswert, weil ein solcher Strahl am besten fokussiert werden kann und daher bei Anwendungen in der Materialbearbeitung die schönsten Schnittflächen und Schweissnähte ergibt.

Eine erfindungsgemässe TEA-$CO_2$-Lasereinheit weist beispielsweise die folgenden technischen Daten auf:

| | |
|---|---|
| Wellenlänge: | 10,6 μm |
| Wirkungsgrad: | 15% |
| Strahlleistung: | bis 500 W, gepulst |
| Strahlquerschnitt: | etwa 1 cm² |
| Pulsweite: | variabel |
| Pulswiederholungsrate: | 1 kHz |
| Zusammensetzung des Gasgemisches: | 20% $CO_2$, 20% $N_2$, 60% He |
| Druck: | etwa $10^5$ Pa |
| Strömungsgeschwindigkeit des Gasgemisches: | 200 m/s |
| Abmessungen des Entladungsraumes: | Länge: 100 cm, Breite = Höhe: 2 cm |
| Spannung zwischen Kathode und Hilfselektrode/ Gesamtstrom: | etwa 2 kV/2 A |
| Spitzenspannung zwischen Kathode und Anode/Strom: | 5 bis 10 kV/4 A |

Die Betriebsparameter für Lasergase anderer Zusammensetzung liegen in vergleichbarer Grössenordnung.

Wird eine Mehrzahl von Lasereinheiten zu einem Lasersystem zusammengeschlossen, so steigt die optische Ausgangsleistung etwa linear mit der Zahl der Lasermodule, alle technischen Daten des einzelnen Moduls bleiben unverändert. Die Ausgangsleistung nimmt in gewissen Fällen sogar überlinear zu, weil bei dem verwendeten Resonator bei grösserem Spiegelabstand ein dickerer Strahl auftritt und damit die Ausnützung des aktiven Plasmas besser wird.

**Patentansprüche**

1. Pulsweise arbeitender, transversal elektrisch angeregter Atmosphärendruck-Gaslaser (TEA-Laser) mit im Umlauf geführtem, gekühltem Arbeitsgas, mit einer gekühlten, als sich in Richtung der optischen Achse (5) erstreckende längliche, metallisch leitende Platte (2, 6, 27) ausgebildeten Kathode, einer im Abstand dazu angeordneten Anode (9, 30) und einer zwischen Kathode und Anode angeordneten durchbrochenen Hilfselektrode (7, 28), dadurch gekennzeichnet, dass zwecks Erzeugung einer die gesamte Kathode (6, 27) bedeckenden Glimmhaut die metallisch leitende Hilfselektrode (7, 28) unmittelbar vor dem Kathodenfall der Hilfsentladung zwischen Kathode und Anode parallel zur Kathode angeordnet ist und gegenüber der Kathode (6, 27) positives Potential aufweist.

2. TEA-Laser nach Anspruch 1, dadurch gekennzeichnet, dass die Kathodenplatte (6) in an sich bekannter Weise für den Durchfluss einer Kühlflüssigkeit hohl ausgebildet ist oder mit Kühlkanälen versehen ist.

3. TEA-Laser nach Anspruch 1 oder 2, dadurch gekennzeichnet, dass die Hilfselektrode (7, 28) in mehrere voneinander elektrisch getrennte Abschnitte unterteilt ist, die durch getrennte Stromquellen anspeisbar sind.

4. TEA-Laser nach den Ansprüchen 1 bis 3, dadurch gekennzeichnet, dass die Hilfselektrode (7, 28) in einen eine unipolare Spannungsimpulse liefernde Spannungsquelle enthaltenden Stromkreis geschaltet ist.

5. TEA-Laser nach den Ansprüchen 1 bis 4, dadurch gekennzeichnet, dass die Anode (9) über eine Funkenstrecke (17) und die Kathode (6) direkt mit einem Kondensator (24) verbunden sind und dass der Kondensator zwecks Aufladung über einen Widerstand (18) an einer Gleichspannungsquelle liegt (Fig. 2).

6. TEA-Laser nach den Ansprüchen 1 bis 5, dadurch gekennzeichnet, dass die Hilfselektrode (7, 28)

a) aus quer zur Längserstreckung der Kathodenplatte verlaufenden Drähten (28') gebildet ist oder

b) als geschlitzte Platte oder als eine Mehrzahl von geschlitzten Platten ausgebildet ist, wobei die Schlitze (28'') senkrecht zur Längserstreckung der Kathodenplatte verlaufen oder

c) als Lochmaske (28''') mit Löchern von etwa 0,5 bis 1 mm Durchmesser und einem Flächenverhältnis von Lochfläche : Stegfläche von etwa 1 : 3 ausgebildet ist oder

d) aus nahe – d.h. in einem Abstand von etwa 1 bis 2 mm – nebeneinanderliegenden, sich quer zur Längsrichtung der Kathode erstreckenden hohlen, von einem nicht leitenden Kühlmittel durchflossenen Stäben mit einem Aussendurchmesser von etwa 2 mm besteht, die getrennt elektrisch anspeisbar sind, wobei vorzugsweise auch die Anode (9, 30) hohl ausgebildet und von einem nicht leitenden Kühlmittel durchflossen ist.

7. TEA-Laser nach den Ansprüchen 1 bis 6, dadurch gekennzeichnet, dass die Hilfselektrode (7, 28) mit ihren Rändern auf zwischen Kathode (27) und Hilfselektrode (28) vorgesehenen Isolierfolienstreifen (29) aufliegt.

8. TEA-Laser nach den Ansprüchen 1 bis 7, dadurch gekennzeichnet, dass die Hilfselektrode (7, 28) in einem Abstand von 0,2 bis 0,7 mm parallel zur Kathode (6, 27) angeordnet ist, wobei die Kathode und die Anode (9, 30) als ebene oder nach Art eines Rogowski-Profiles gekrümmte Platte ausgebildet ist.

9. TEA-Laser nach den Ansprüchen 1 bis 8, dadurch gekennzeichnet, dass die Kathode (27), die durchbrochene, im Bereich des Kathodenfalles angeordnete Hilfselektrode (28) und die Anode (30) in einem geschlossenen Gehäuse angeordnet sind, wobei die Längserstreckung ein Vielfaches – mindestens das 10fache – der Breiten- bzw. Höhenerstreckung des Gehäuses beträgt, und das Gehäuse im wesentlichen über seine ganze Länge gegenüberliegende Schlitze zum Ein- und Austritt des Arbeitsgases aufweist, wobei vorzugsweise das Gas zwischen Austritt und Eintritt über einen Wärmeaustauscher (32, 33) und eine Pumpe (31) im Kreislauf geführt ist, vorzugsweise mit einer Geschwindigkeit von etwa 200 m/s.

10. Lasersystem mit TEA-Lasern nach Anspruch 9, dadurch gekennzeichnet, dass eine Mehrzahl von jeweils eine Kathode, eine im Bereich des Kathodenfalles angeordnete Hilfselektrode und eine Anode enthaltenden Gehäusen zu einer Kette zusammengefasst sind, wobei an einem Ende der Kette eine Gehäusewand (25) einen total reflektierenden Spiegel (37) und eine Gehäusewand am anderen Ende der Kette einen teildurchlässigen Spiegel (37') aufweisen und alle Gehäusewände dazwischen durch gasdichte Kupplungsstücke (40), welche gegebenenfalls als Modenblende (44) ausgebildet sind, untereinander verbunden sind.

11. Lasersystem nach Anspruch 10, dadurch gekennzeichnet, dass alle Gehäusewände (25) dazwischen mit für die Wellenlänge der erzeugten Strahlung durchlässigen Fenstern versehen sind.

**Claims**

1. Transversely electrically excited atmospheric pressure gas laser (TEA-Laser) working in a pulsed mode and including a cooled working gas conducted in circulation, a cooled cathode designed as a metallically conducting, elongated plate (2, 6, 27) extending in the optical axis (5), an anode (9, 30) arranged at a distance therefrom, and an open-worked auxiliary electrode (7, 28) arranged between the cathode and the anode, characterised in that, for the purpose of producing a glow skin covering the entire cathode (6, 27), the metallically conducting auxiliary electrode (7, 28) is arranged parallel to the cathode immediately in front of the cathode drop of the auxiliary discharge between the cathode and the anode and has a positive potential with respect to the cathode (6, 27).

2. TEA-laser according to claim 1, characterised in that the cathode plate (6), in a manner known per se, is hollowly designed or provided with cooling channels for the passage of a cooling liquid.

3. TEA-laser according to claim 1 or 2, characterised in that the auxiliary electrode (7, 28) is subdivided into several sections electrically separated from one another and feedable by separate current sources.

4. TEA-laser according to claims 1 to 3, characterised in that the auxiliary electrode (7, 28) is incorporated in an electric circuit containing a voltage source delivering unipolar voltage pulses.

5. TEA-laser according to claims 1 to 4, characterised in that the anode (9) is connected via a spark gap (17) and the cathode (6) is connected directly, to a capacitor (24), and that the capacitor is connected to a direct-voltage source for charging via a resistor (18) (Fig. 2).

6. TEA-laser according to claims 1 to 5, characterised in that the auxiliary electrode (7, 28)

(a) is formed by wires (28') extending transversely to the longitudinal extension of the cathode plate, or

(b) is designed as a slotted plate or a plurality of slotted plates, the slots (28'') extending perpendicular to the longitudinal extension of the cathode plate, or

(c) is designed as a hole mask (28''') comprising holes having a diameter of about 0.5 to 1 mm and a surface ratio of hole surface : web surface of about 1 : 3, or

(d) is comprised of closely – i.e. at a distance of about 1 to 2 mm – adjacent, hollow rods extending transversely to the longitudinal direction of the cathode and having an outer diameter of about 2 mm, through which rods a non-conducting coolant flows and which are separately electrically feedable, wherein advantageously also the anode (9, 30) is hollowly designed and flowed through by a non-conducting coolant.

7. TEA-laser according to claims 1 to 6, characterised in that the auxiliary electrode (7, 28), with its edges, rests on insulating-film strips (29) provided between the cathode (27) and the auxiliary electrode (28).

8. TEA-laser according to claims 1 to 7, characterised in that the auxiliary electrode (7, 28) is arranged parallel to the cathode (6, 27) at a distance of 0.2 to 0.7 mm, the cathode and the anode (9, 30) being designed as planar plates or as plates curved in the manner of a Rogowsky profile.

9. TEA-laser according to claims 1 to 8, characterised in that the cathode (27), the open-worked auxiliary electrode (28) arranged in the region of the cathode drop, and the anode (30) are arranged in a closed casing, the longitudinal extension amounting to a multiple – at least the ten-fold – of the width and height extensions of the casing, and that the casing comprises slots arranged opposite one another substantially over its total length for the entry and the exit of the working gas, wherein the gas preferably is guided in circulation between the exit and the entry via a heat exchanger (32, 33) and a pump, preferably at a speed of about 200 m/s.

10. Laser system comprising TEA-lasers according to claim 9, characterised in that a plurality of casings each containing a cathode, an auxiliary electrode arranged in the region of the cathode drop, and an anode are combined into a chain, one casing wall (25) on one end of the chain comprising a totally reflecting mirror (37) and one casing wall on the other end of the chain comprising a partially transmissible mirror (37'), and all the casing walls therebetween being connected with one another by gasproof coupling pieces (40), which are designed as mode screens (44) if desired.

11. Laser system according to claim 10, characterised in that all the casing walls (25) therebetween are provided with windows that are transmissible for the wave length of the radiation produced.

## Revendications

1. Laser à gaz impulsionnel à excitation électrique transversale, fonctionnant à la pression atmosphérique (laser TEA), avec un gaz refroidi en circulation; une cathode réalisée sous forme d'une plaque conductrice (2, 6, 27) allongée suivant l'axe optique (5); une anode (9, 30) disposée à distance de la cathode et une électrode auxiliaire (7, 28) perforée, disposée entre la cathode et l'anode, ledit laser étant caractérisé en ce que pour la production d'une gaine recouvrant toute la cathode (6, 27), l'électrode auxiliaire (7, 28) conductrice est disposée immédiatement avant la chute cathodique de la décharge auxiliaire entre cathode et anode, parallèlement à la cathode, et présente un potentiel positif par rapport à la cathode (6, 27).

2. Laser TEA selon revendication 1, caractérisé en ce que la plaque cathodique (6) est, de façon connue, creuse pour la circulation d'un liquide de refroidissement ou munie de canaux de refroidissement.

3. Laser TEA selon une des revendications 1 ou 2, caractérisé en ce que l'électrode auxiliaire (7, 28) est divisée en plusieurs secteurs isolés électriquement et alimentés par des sources de courant séparées.

4. Laser TEA selon revendications 1 à 3, caractérisé en ce que l'électrode auxiliaire (7, 28) est inséré dans un circuit comportant une source de tension qui délivre des impulsions de tension unipolaires.

5. Laser TEA selon revendications 1 à 4, caractérisé en ce que l'anode (9) est reliée par un éclateur (17) et la cathode (6) est reliée directement à un condensateur (24) et le condensateur est relié par une résistance (18) à une source de tension continue en vue de la charge (figure 2).

6. Laser TEA selon revendications 1 à 5, caractérisé en ce que l'électrode auxiliaire (7, 28)

a) est constituée par des fils (28') perpendiculaires à la longueur de la plaque cathodique ou

b) est réalisée sous forme d'une plaque à fente ou de plusieurs plaques à fentes, les fentes (28'') étant perpendiculaires à la longueur de la plaque cathodique, ou

c) est réalisée sous forme d'un masque perforé (28''') avec des trous d'un diamètre d'environ 0,5 à 1 mm et un rapport surface des trous/surface des ligaments d'environ $1/3$, ou

d) est constituée par des barreaux creux, d'un diamètre extérieur d'environ 2 mm, parcouru par un fluide réfrigérant non conducteur, disposés perpendiculairement à la longueur de la cathode, juxtaposés c'est-à-dire avec un écartement d'environ 1 à 2 mm –, et alimentés séparément, l'anode (9, 30) étant également creuse de préférence, et parcourue par un fluide réfrigérant non conducteur.

7. Laser TEA selon revendications 1 à 6, caractérisé en ce que les bords de l'électrode auxiliaire (7, 28) reposent sur des rubans isolants (29) prévus entre la cathode (27) et l'électrode auxiliaire (28).

8. Laser TEA selon revendications 1 à 7, caractérisé en ce que l'électrode auxiliaire (7, 28) est disposée parallèlement à la cathode (6, 27) et à une distance de 0,2 à 0,7 mm, la cathode et l'anode (9, 30) étant réalisée chacune sous forme d'une plaque plane ou d'une plaque courbée suivant un profil de Rogowsky.

9. Laser TEA selon revendications 1 à 8, caractérisé en ce que la cathode (27), l'électrode auxiliaire (28) perforée, disposée au voisinage de la chute cathodique, et l'anode (30) sont logées dans un boîtier fermé dont la longueur est un multiple – le décuple au moins – de la largeur et de la hauteur et le boîtier présente sur pratiquement sur toute sa longueur des fentes en regard pour l'entrée et la sortie du gaz, qui est guidé en circuit fermé dans un échangeur de chaleur (32, 33) et une pompe (31) entre la sortie et l'entrée, de préférence à une vitesse d'environ 200 m/s.

10. Système laser à lasers TEA selon revendication 9, caractérisé en ce que plusieurs boîtiers contenant chacun une cathode, une électrode auxiliaire disposée au voisinage de la chute cathodique et une anode, sont réunis en une chaîne, une paroi (25) de boîtier située à une extrémité de la chaîne comportant un miroir (37) à réflexion totale et une paroi de boîtier située à l'autre extrémité de la chaîne comportant un miroir semi-transparent (37'); et toutes les parois de boîtier intermédiaires sont réunies par des raccords (40) étanches aux gaz et, le cas échéant, réalisés en diaphragme de mode (44).

11. Système laser selon revendication 10, caractérisé en ce que toutes les parois (25) de boîtier intermédiaires sont munies de fenêtres transparentes pour la longueur d'onde du rayonnement produit.

# Fig.1

# Fig.2

**Fig. 3**

**Fig.4a**    **Fig.4b**    **Fig.4c**    **Fig.4d**

**Fig.4e**    **Fig.4f**

## Fig.5

## Fig.6

## Fig.7